# EUROPÄISCHE PATENTSCHRIFT

(11) **EP 3 090 835 B1**
(45) Veröffentlichungstag und Bekanntmachung des Hinweises auf die Patenterteilung: **07.06.2017**
(21) Anmeldenummer: 15166881.1
(22) Anmeldetag: 08.05.2015
(51) Int. Cl.: B25B 25/00, B25B 27/10, F16L 33/025, F16L 33/207

(54) **PRESSWERKZEUG UND SEINE VERWENDUNG ZUM VERPRESSEN EINES FITTINGS**
PRESS TOOL AND ITS USE FOR PRESSING A FITTING
OUTIL DE PRESSE ET SON UTILISATION POUR COMPRIMER UN RACCORD

(43) Veröffentlichungstag der Anmeldung: 09.11.2016
(73) Patentinhaber: Geberit International AG, 8645 Jona (CH)
(72) Erfinder: Heusser, Urs, 8722 Kaltbrunn (CH); Graf, Pascal, 8132 Egg bei Zürich (CH); Lippuner, Marc, 8645 Jona (CH)
(74) Vertreter: König Szynka Tilmann von Renesse Patentanwälte Partnerschaft mbB

(56) Entgegenhaltungen:
- US-A- 4 724 729
- US-A1- 2011 138 606

## Beschreibung

Die vorliegende Erfindung betrifft ein Presswerkzeug für ein Pressfitting und seine Verwendung zur Verpressung des Pressfittings.

Fittinge dienen zum Befestigen einer Schlauch- und hier vorzugsweise Rohrleitung an einem anderen Teil, etwa einer Armatur, oder zum Koppeln von Leitungen aneinander. Man unterscheidet unterschiedliche Typen, und zwar nach der Art der abdichtenden Befestigung der Leitung an dem Fitting. Neben selbst-arretierenden Schiebefittingen, bei denen die Leitung eingesteckt wird und sich bei Zugbelastung in umgekehrter Richtung selbst befestigt, und Schiebefittingen, bei denen ein Fittingteil zur Befestigung in axialer Richtung (bezogen auf die Leitung) verschoben wird, sind auch Pressfittinge bekannt. Bei diesen wird ein Fittingteil mit einem speziellen Werkzeug plastisch verformt; im Regelfall handelt es sich um ein Metallblechteil. Bei vielen Pressfittingen dient dabei eine hohlzylindrische Metallblech-Presshülse zum Verpressen und wird entlang ihres im Wesentlichen gesamten Umfangs und damit auch entlang des gesamten Umfangs der Leitung von einer Presszange gegriffen und verformt.

Im Unterschied dazu gibt es speziellere Pressfittingtypen mit von einem im Wesentlichen hohlzylindrischen beziehungsweise ringförmigen Teil radial (wieder in Bezug auf die Zylindergeometrie und damit die Leitung) abstehender Presslasche. Beim Verpressen greift das Werkzeug nur die Presslasche, wobei diese senkrecht zur axialen und zur radialen Richtung in solcher Weise zusammengepresst wird, dass der ringförmige Teil gespannt und auf die Leitung aufgedrückt wird. In der Literatur wird hier in Anlehnung an einen einschlägigen Schweizer Hersteller öfters auch von Oetiker-Typ gesprochen, gelegentlich findet sich für die Presslasche auch der Ausdruck "Pressohr".

Bei der Presslasche handelt es sich in der Regel um einen einstückig mit dem ringförmigen Teil ausgebildeten Blechstreifenabschnitt, der radial gegenüber der Ringform nach außen vorsteht und dabei oft ein im wesentlichen flaches Plateau bildet, das nach außen weist. Ein aus der Presslasche und dem ringförmigen beziehungsweise Zylinderteil bestehende Metallblechabschnitt des Pressfittings wird oft auch als Spannzange bezeichnet. Das Presswerkzeug greift zwischen das Plateau und den ringförmigen Teil und erzeugt oder verstärkt beim Verpressen Hinterschnitte.

Beispielhaft kann verwiesen werden auf die EP 2 341 273 A1, die EP 2 497 989 A1, die EP 2 607 764 A1 und schließlich die EP 2 607 768 A1.

Die zugehörigen Presswerkzeuge werden gelegentlich auch als Presszangen bezeichnet und bilden häufig Aufsätze für motorische (insbesondere pneumatische) Antriebe. Beispielsweise bietet die bereits erwähnte Schweizer Herstellerin Oetiker solche Presswerkzeuge mit Motorantrieb an. Dem Begriff "Zange" entsprechend weisen die Presswerkzeuge zwei Werkzeughälften auf, die aufeinander zu und voneinander weg bewegbar sind, was einer Schließ- und einer Öffnungsbewegung entspricht. Die Werkzeughälften weisen dabei regelmäßig mehr oder weniger keilförmige Spitzen auf, die in den bereits erwähnten Bereich zwischen dem Plateau der Spannzange und der Presslasche eingreifen.

Ferner sind von einem Pressfitting abtrennbare Fittingteile als "Indikatoren" für die Verpressung bekannt. Dabei handelt es sich um zumindest auch an der Presslasche angeordnete Kunststoffelemente, die durch das Presswerkzeug beim Verpressen der Presslasche zerbrochen, zerquetscht oder zerrissen werden, z. B. Folienstücke. Die Indikatorfunktion ergibt sich daraus, dass das Vorhandensein eines intakten solchen Indikators bzw. Fittingteils eine Verpressung ausschließt, und im Umkehrschluss der Monteur oder eine Kontrollperson am Fehlen oder einer typischen Beschädigung des Indikators erkennt, dass (jedenfalls bei dem betreffenden Pressfitting) bereits verpresst wurde. Diese Kontrolle wird in der Praxis als wichtig angesehen, um versehentlich unverpresst bleibende und möglicherweise später nicht mehr zugängliche Pressfittinge ausschließen zu können.

Zum Stand der Technik wird ergänzend verwiesen auf die US 4,724,729 A mit einem Presswerkzeug für einen Pressfitting mit einem zylindrischen Teil und davon abstehender Presslasche, wobei die Verpressung senkrecht zu der axialen Richtung des Fittings und durch aufeinander zu schließbare Werkzeughälften des Presswerkzeugs erfolgt und wobei die Werkzeughälften auch im geschlossenen Zustand jeweils in axialer Richtung seitlich eine Öffnung aufweisen.

Ferner wird verwiesen auf die US 2011/0138606 A1 mit einem insoweit vergleichbaren Inhalt. Von einem Indikator ist in keinem der beiden Dokumente die Rede.

Der Erfindung liegt die Aufgabe zugrunde, Verbesserungen hinsichtlich eines Verpress-Indikators an dem Pressfitting zu schaffen.

Gelöst wird diese Aufgabe durch eine Verwendung eines Presswerkzeugs zum Verpressen eines Pressfittings mit einem zylindrischen Teil und einer davon abstehenden Presslasche senkrecht zu einer axialen Richtung des Pressfittings, wobei der Pressfitting einen Fittingteil als Indikator für die Verpressung der Presslasche aufweist, der bei dem Verpressen von dem Pressfitting abgenommen, zwischen Werkzeughälften des Presswerkzeugs aufgenommen und nach der Verpressung ausgeworfen wird,
sowie durch einen entsprechend ausgestalteten Satz aus einem passenden Presswerkzeug und einem Pressfitting nach Anspruch 12.

Bevorzugte Ausgestaltungen sind Gegenstand der Unteransprüche. Die einzelnen Merkmale sind für alle denkbaren Anspruchskategorien relevant, insbesondere das Presswerkzeug, dessen Verwendung und ein Verfahren zum Verpressen.

Wie eingangs bereits erwähnt, ist es grundsätzlich bekannt, abnehmbare Pressfittingteile als Indikatoren für die Tatsache der Verpressung einzusetzen, wobei diese Indikatoren durch den Verpressvorgang von dem Fitting abgenommen (und zwar im Stand der Technik abgerissen) werden. Auf dieser Grundlage schlägt die Erfindung eine Aufnahme dieses Indikators zwischen Werkzeughälften des Presswerkzeugs vor, die die Presslasche von zwei entgegengesetzten Seiten greifen und verpressen. Nach der Verpressung soll der aufgenommene Indikator dann ausgeworfen werden. In dieser Weise kann erfindungsgemäß die Entfernung des Indikators besser kontrolliert werden als bei vorbekannten Lösungen. Bei diesen fällt der Indikator unabhängig von dem Presswerkzeug in Teilen zu Boden und verbleibt in Teilen an dem Pressfitting.

Vorzugsweise ist der Indikator bei einem geeigneten Pressfitting nur im Bereich der Presslasche und ihrer direkten Umgebung vorgesehen, also nicht um den Umfang des zylindrischen Teils einer aus der Presslasche und diesem zylindrischen Teil bestehenden Spannzange herum. Dann kann der Indikator vollständig zwischen den Werkzeughälften aufgenommen und nach der Verpressung ausgeworfen werden.

Vorzugsweise erfolgt das Auswerfen seitlich, und zwar an den Seiten in der axialen Richtung des Fittings, also der von dem Fitting aufzunehmenden oder aufgenommenen Leitung. Alternativ bietet sich auch ein Auswerfen in radialer Richtung an, also in der Richtung auf den Pressfitting zu, wobei dies dann bevorzugt im Laufe des oder mit dem Abnehmen des Werkzeugs von dem Fitting erfolgt.

Zugunsten des seitlichen Auswerfens sieht ein erfindungsgemäßes Presswerkzeug zumindest eine Auswurföffnung vor, und zwar in (bezogen auf die axiale Richtung) seitlichen Außenwänden der Werkzeughälften. Z. B. kann also ein Teil (die Hälfte) der Auswurföffnung in der Seitenwand der einen und ein weiterer Teil (die andere Hälfte) in der Seitenwand der anderen Werkzeughälfte vorgesehen sein; es können aber vorzugsweise auch zwei Auswurföffnungen an entgegengesetzten Seiten vorgesehen sein.

Bei einer günstigen Form der Befestigung des Indikators an dem Pressfitting ist dieser durch einen elastisch zu lösenden Formschluss gehalten, also in anderen Worten "aufgeclipst". In diesem Fall kommt es erfahrungsgemäß dazu, dass während des Abnehmens des Indikators infolge der elastischen Verformung ein Wegspringen des Indikators mit einer gewissen kinetischen Energie auftritt. Erfindungsgemäß wird ein solcher wegspringender Indikator zwischen den Werkzeughälften aufgefangen oder das Wegspringen durch die Aufnahme zwischen den Werkzeughälften ganz unterbunden.

Hierzu kann der Indikator eine geschlossen umlaufende Form haben, die im aufgesetzten Zustand die Presslasche umgibt und radial außerhalb derselben eine Öffnung aufweist. Wenn und da der Indikator dabei aus einem elastischen Material besteht, kann diese Bauweise zu dem elastischen Formschluss bzw. der dafür notwendigen Verformbarkeit beitragen. Die Öffnung ist vorzugsweise relativ groß und kann günstigerweise den gesamten Bereich außerhalb der Presslasche erfassen.

Insbesondere im Zusammenhang mit dem beschriebenen elastischen Wegspringen des Indikators kann es hilfreich sein, diesen nach dem elastischen Lösen zwischen den Werkzeughälften einzuklemmen, um ein unkontrolliertes Wegspringen zu verhindern. Dazu können an den einander zugewandten Innenseiten der Werkzeughälften entsprechende Klemmkanten vorgesehen sein, gegen die der Indikator in Anlage kommt, um geklemmt zu werden. Die Kanten können z. B. wie beim Ausführungsbeispiel an nasenartigen Vorsprüngen gebildet sein.

Beim Einklemmen hilft eine Elastizität des Indikators, etwa in Verbindung mit der beschriebenen Öffnung darin. Es könnten aber auch an den Werkzeughälften elastische Bereiche vorgesehen sein.

Ferner sind die Werkzeughälften in einem dem Indikator gegenüberliegenden Innenbereich beim Auswerfen geschlossen gestaltet, um ein unbeabsichtigtes Verklemmen des Indikators "tiefer" im Werkzeug zu verhindern. Dieser geschlossene Zustand muss nicht in jeder Position des Werkzeugs gegeben sein, insbesondere nicht bei vollständiger Öffnung der Werkzeughälften, sondern bezieht sich auf diejenige Position, in der das Auswerfen erfolgt, was beim Ausführungsbeispiel eine weitgehend geschlossene Position der Werkzeughälften ist. Der Begriff "geschlossen" bedeutet dabei, dass allenfalls Löcher oder Schlitze in einer Dimension verbleiben, die deutlich kleiner als die typischen Abmessungen des Indikators ist, und die daher unwesentlich sind.

Von besonderem Vorteil ist die Erfindung mit einer spezifischen Ausgestaltung des Presswerkzeugs, nämlich einer Aufteilung der Werkzeughälften in der Verpressung dienende Pressteile und dem Führen des Presswerkzeugs auf dem Fitting dienenden Führungsteilen. Dabei sollen sich die Pressteile ab einem bestimmten Punkt der Schließbewegung in einer darauf folgenden Schlussphase über die Führungsteile hinaus aufeinander zu bewegen, nämlich nachdem die Führungsteile bereits eine weitgehende oder vollständige Positionierung hergestellt haben. In diesem Zusammenhang kann durch die Schließbewegung der Pressteile dann der Indikator abgeclipst werden. Für die bereits erwähnten seitlichen Auswurföffnungen kommen insbesondere seitliche Außenwände der Führungsteile in Betracht. Insbesondere gilt dies bei Führungsteilen, die pro Werkzeughälfte beidseits eines jeweiligen Pressteils vorgesehen sind, wobei dann vorzugsweise zwei Auswurföffnungen, je eine an einer der entgegengesetzten Seiten, vorgesehen sind.

Die Erfindung wird im Folgenden anhand eines Ausführungsbeipiels näher erläutert, dessen einzelne Merkmale auch in anderen Kombinationen und für alle Erfindungskategorien wesentlich sein können.
- Figur 1: zeigt eine perspektivische Ansicht eines für die Erfindung besonders geeigneten Pressfittings;
- Figuren 2a, b: zeigen zwei Schnittdarstellungen durch den Pressfitting aus Figur 1 quer zur Leitungsrichtung und in zwei verschiedenen Positionen entlang dieser Leitungsrichtung;
- Figuren 3a, b: zeigen den Pressfitting aus den Figuren 1 und 2 in Einzelteilen und in zwei verschiedenen perspektivischen Ansichten;
- Figuren 4a-c: zeigen ein erfindungsgemäßes Presswerkzeug für den Pressfitting aus den Figuren 1-3, und zwar in geöffneter Position, wobei die Einzeldarstellungen eine perspektivische Ansicht und zwei Schnittansichten quer zur Leitungsrichtung in unterschiedlichen Schnittpositionen entlang dieser Leitungsrichtung bilden;
- Figuren 5a-d und 6a-d: zeigen ein erfindungsgemäßes Presswerkzeug für den Pressfitting aus den Figuren 1-3, und zwar in teilgeschlossener und ganz geschlossener Position, wobei die Einzeldarstellungen eine perspektivische Ansicht, zwei Schnittansichten quer zur Leitungsrichtung in unterschiedlichen Schnittpositionen entlang dieser Leitungsrichtung und schließlich eine weitere perspektivische Ansicht mit auf ein Pressfitting gemäß den Figuren 1-3 angesetztem Presswerkzeug bilden;
- Figuren 7a, b: entsprechen den Figuren 5c, d, aber nach der Verpressung und mit abgenommenem Indikator.

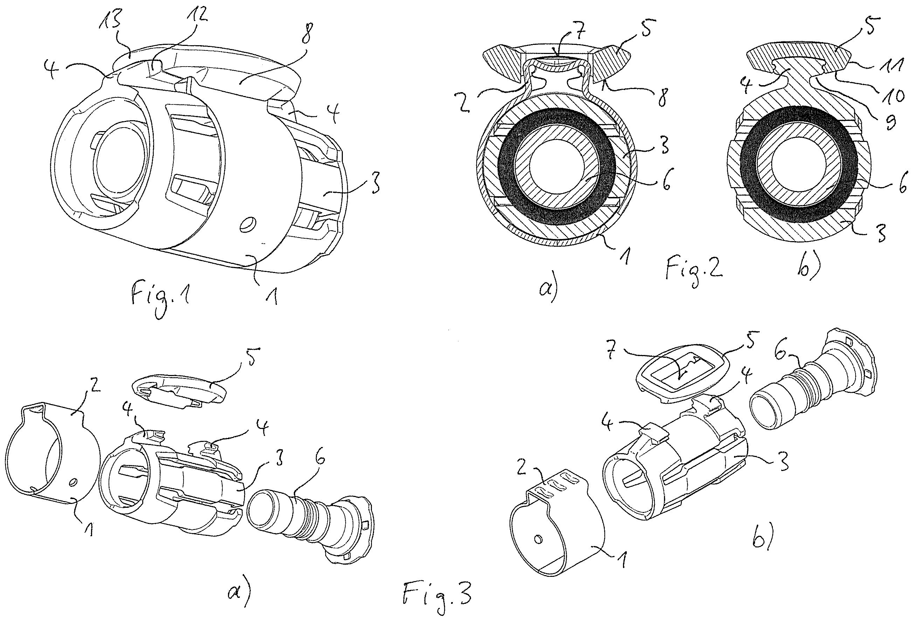

Die Figuren 1-3 zeigen einen für ein erfindungsgemäßes Presswerkzeug besonders geeigneten Pressfitting. In den Figuren 3a und b erkennt man eine Metallblech-Spannzange 1 mit einer nach außen abstehenden Presslasche 2, die gemäß Figur 1 und Figur 2a auf einem Hülsenteil 3 mit nach oben und damit außen abstehenden Stegen 4 montiert ist. (Figur 2a zeigt einen Schnitt quer zur Leitungsrichtung durch die Mitte (in Bezug auf die Leitungsrichtung) des Pressfittings und Figur 2b einen Schnitt durch eine in Leitungsrichtung versetzte Ebene, allerdings nur insoweit versetzt, als der Indikator 5 noch mitgeschnitten ist.) Die Stege 4 dienen zum Halten eines Indikators 5. Ferner zeigen die Figuren 1-3 noch ein Stützhülsenteil 6, das bspw. Teil einer Armatur sein kann. Der Pressfitting aus den Teilen 1, 3 und 5 dient dann z. B. zum Montieren einer in den Figuren 1 und 3 nicht gezeigten, aber in den Figuren 2a und b geschwärzt eingezeichneten Rohrleitung auf dem Stützhülsenteil 6. Dieses Stützhülsenteil 6 kann insoweit als Teil des Pressfittings aufgefasst werden, als es die Rohrleitung von innen gegen den Anpressdruck infolge der Verpressung des Pressfittings stabilisiert. Es ist allerdings im vorliegenden Fall konventionell ausgebildet und für die Erfindung nicht von weitergehendem Interesse und daher nicht zwingender Anspruchsbestandteil.

Üblicherweise wird die Spannzange 1 mit Hilfe des Hülsenteils 3 auf dem Stützhülsenteil 6 montiert, etwa indem der in den Figuren 1 und 3 rechte hintere Teil des Hülsenteils 3 auf einer Schulter des Stützhülsenteils 6 clipsend arretiert wird. In den dadurch entstehenden Ringraum kann das Rohrleitungsende von der anderen Seite, also in Figur 1 von links vorne, bis zum Anschlag eingeschoben werden. Dann entsteht die Situation gemäß den Figuren 2a und b. Durch ein an sich bekanntes Verpressen der beiden ungefähr radial verlaufenden Schenkel der Presslasche 2 in Umfangsrichtung nach innen wird der übrige zylindrische Teil der Spannzange 1 gespannt und in dieser gespannten Lage gehalten, weil die Presslasche plastisch verformt wird. Das ist an sich als sogenannter Oetiker-Pressfitting bekannt. Der dadurch entstehende Anpressdruck wird in diesem Fall durch das Hülsenteil 3 nach innen vermittelt, wobei dieses durch sich in Leitungsrichtung (axial) erstreckende Schlitze nachgeben kann. Auf die übrigen Einzelheiten des ganz ungefähr zylindrischen Teils des Hülsenteils 3 wird hier nicht im Einzelnen eingegangen, sie sind Gegenstand einer anderen Patentanmeldung. Von Interesse für die vorliegende Erfindung sind aber die beiden Stege 4.

Die beiden Stege 4 dienen in noch näher zu erläuternder Weise zur Halterung des Indikators 5. Wie die Figuren 2b und 3a zeigen, haben die axial gesehen äußeren Enden des Indikators 5 eine ungefähr umgekehrte U-Form, die klammerartig einen Querteil eines ungefähr T-förmiges Profils des jeweiligen Steges 4 seitlich übergreift.

Dabei ist der Indikator 5 auf den Querteil des T-Profils der beiden Stege 4 aufgeclipst. Hierzu hat er als Kunststoffspritzgussteil eine gewisse Eigenelastizität, sodass die Schenkel des umgekehrten U-Profils des Indikators 5 etwas auseinandergebogen werden können. Die innen liegenden Seiten dieser Schenkel und die dementsprechenden Außenseiten des Querteils des T-Profils haben ferner, wie vor allem Figur 2b zeigt, jeweilige Rast- oder Clipsvorsprünge und Ausnehmungen in einer sich aus Figur 3a ergebenden, im Wesentlichen in Leitungsrichtung gestreckten Form. Davon unabhängig sind die genannten Flächen des Steges 4 und des Indikators 5 jeweils hinterschnitten, sodass die Clipsverbindung schon ohne die dargestellten Vorsprünge und Ausnehmungen halten würde, wenngleich schwächer.

Die Figuren 1 und 2a veranschaulichen ferner, dass eine ähnliche Clipsverbindung auch im (in Leitungsrichtung, also axial) gesehen mittleren Bereich des Pressfittings möglich wäre, indem der Indikator 5 dort in analoger Weise in die durch die seitlichen Wände der Presslasche 2 gebildeten Hinterschnitte eingreift. Dies ist aber bei diesem Ausführungsbeispiel nicht der Fall; die Clipsverbindung beschränkt sich vielmehr auf die Pressfittingbereiche axial neben der Spannzange 1.

Die zu der Presslasche 2 weisenden Innenseiten der weiter unten noch zu erläuternden Öffnung in dem Indikator 5 sind vielmehr ungefähr parallel zu der erwähnten Richtung des Abclipsens gemäß Figur 2a sogar einen gewissen Abstand von der Presslasche 2 ein. Das erleichtert eine elastische Verformung und das Abclipsen beim Verpressen.

Allerdings zeigt die in Figur 2a nach unten weisende Seite des Indikators 5, also die dem zylindrischen Teil der Spannzange 1 zugewandte Seite, eine besonders ausgeprägt schräge Form 8, wobei sich die Orientierungsangabe "schräg" auf eine radiale Richtung mitten durch die Presslasche 2 der Spannzange 1 bezieht. Das ist die Richtung, in der der Indikator 5 idealisierterweise abgenommen werden soll.

Hierzu greifen noch näher zu erläuternde keilförmige Spitzen von Pressteilen des Werkzeugs beim Verpressvorgang unter diese schrägen Flächen 8 des Indikators 5 und erzeugen durch Keilwirkung eine Kraft nach oben, also in der erwähnten Richtung. Diese Kraft löst die beschriebene Clipsverbindung, also den Formschluss zwischen Indikator 5 und Hülsenteil 3 (konkret den Stegen 4), sodass nach dem Verpressen in der beschriebenen verclipsten Position kein Indikator 5 mehr zu sehen ist. Da dieser in einer Signalfarbe gehalten ist, die sich von den Farben der übrigen Pressfittingteile deutlich unterscheidet, ergibt sich daraus ein wesentlicher Unterschied im Erscheinungsbild.

Beim vorliegenden Beispiel sind die Indikatoren reversibel abclipsbar, können also im Prinzip gesammelt und für neue Pressfittinge wiederverwendet werden.

Die Stabilität des Indikators 5 selbst wird dadurch gefördert, dass er die Presslasche 2 vollständig umläuft, wie vor allem die Figuren 1 und 3b zeigen. Dabei weist er allerdings radial außerhalb der Presslasche 2 eine große Öffnung auf, die in Figur 3b mit 7 bezeichnet ist und durch die hindurch im montierten Zustand (Figur 2a) das in Figur 3b sichtbare Plateau der Presslasche gut erkennbar ist. Die dem Benutzer vertraute technische Natur des Pressfittings als Oetiker-Pressfitting mit der an sich vorbekannten Presslaschenform ist also trotz des relativ groß gehaltenen Indikators 5 unmittelbar erkennbar und deutlich. Ferner kann das für den Indikator 5 verwendete (und in vielen Fällen wohl nicht wiederzuverwendende) Material knapp gehalten werden.

Figur 2b zeigt das Querschnittsprofil des Indikators 5 und des Steges 4 axial neben der Spannzange 1, aber noch im Bereich des T-Profils des Steges 4. Man erkennt gut, dass der Querteil des T-Profils durch den Indikator 5 gewissermaßen verbreitert wird und dabei setzt das Profil des Indikators 5 zunächst eine nach unten, also zum zylindrischen Teil der Spannhülse 1 weisenden schrägen Flächenabschnitt 9 unter dem Querteil des T-Profils des Steges 4 fort, und zwar mit einem ebenso schrägen Flächenabschnitt 10, an den sich dann ein deutlich steilerer, aber immer noch im gleichen Sinn schräger Flächenabschnitt 11 anschließt.

Figur 1 verdeutlicht, dass sich der Flächenabschnitt 11 auch über den Teil des Indikators 5 über der Spannzange 1 hinweg fortsetzt und dabei mit nur kleinem Knickwinkel in den bereits beschriebenen schrägen Flächenabschnitt 8 übergeht (Figur 2a), wohingegen der Flächenabschnitt 10 von dem Flächenabschnitt 8 deutlich abgegrenzt ist, vgl. Figur 1.

Schließlich gibt es an den Außenseiten in axialer Richtung der Querteile der Stege 4 schräge Flächen 12, an die ebenfalls eine Außenfläche 13 des Indikators weitgehend bündig anschließt und die in doppeltem Sinn schräg sind: Einerseits sind sie leicht nach unten gekippt, also auf den Hülsenteil 3 bzw. dessen zylindrischen Hauptabschnitt zu, andererseits in Umfangsrichtung nach außen etwas zurückspringend. Die axiale Erstreckung der Querteile der Stege 4 ist also weiter innen, an der Basis des T-Profils, etwas größer als weiter außen.

Die Funktion der verschiedenen schrägen Flächenabschnitte 9-12 ergibt sich aus der folgenden Beschreibung der Wechselwirkung mit dem erfindungsgemäßen Presswerkzeug:

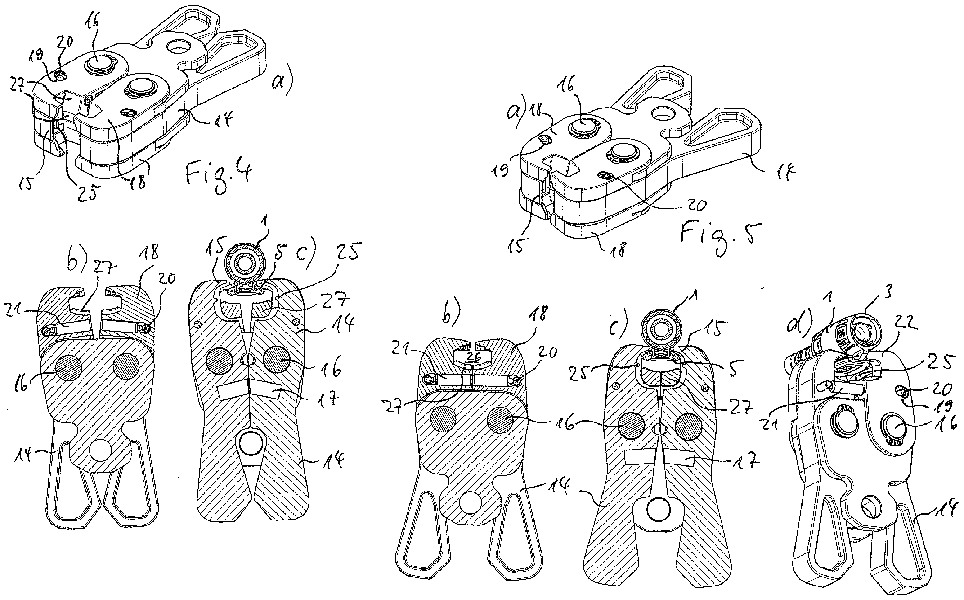

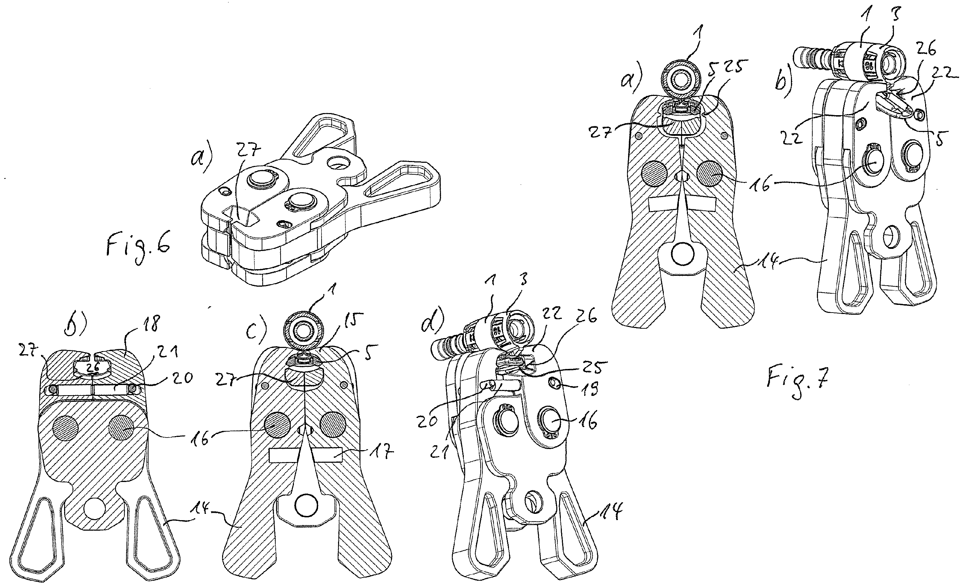

Die Figuren 4 bis 7 zeigen ein erfindungsgemäßes und speziell für den beschriebenen Pressfitting ausgelegtes Presswerkzeug, das grundsätzlich zangenartig aufgebaut ist. In den Figuren ist dieses Presswerkzeug in verschiedenen Positionen, nämlich in Figur 4 zunächst geöffnet zum "Überstülpen" über den Indikator 5 und vor allem die Presslasche 2, dann in Figur 5 teilgeschlossen und positioniert, dann in Figur 6 in vollständig geschlossener Verpressstellung und schließlich in Figur 7 in wieder teilgeöffneter Position zum Auswerfen des Indikators 5 dargestellt. Dabei zeigen die Teildarstellungen 4-6a jeweils eine perspektivische Ansicht, 4-6b einen außermittigen Schnitt quer zu den noch zu erläuternden Drehachsen, dann 4-6c sowie 7a einen mittigen Schnitt einschließlich Pressfitting ebenfalls quer zu den Drehachsen und schließlich 5d, 6d sowie 7b je eine weitere perspektivische Ansicht zusammen mit dem Pressfitting.

Man erkennt dabei zunächst, dass das Werkzeug im Wesentlichen in drei Ebenen aufgebaut ist.

Die an sich vorbekannte Verpressfunktion wird durch die mittlere Ebene wahrgenommen. Die Figuren 4c, 5c, 6c und 7a zeigen hierbei zwei presszangenartige Arme 14 mit einem jeweiligen keilartigen Kopf, nämlich einem Pressteil 15 des Werkzeugs. Die Presszangenarme 14 sind um zwei quer beabstandete Drehachsen 16 verschwenkbar und werden durch eine in den dargestellten Sacklöchern 17 gelagerte Kompressionsschraubenfeder (nicht gezeigt) in Schließrichtung beaufschlagt. Zusätzlich ist ein nicht gezeigter motorischer Antrieb vorgesehen, der im Wesentlichen einen Keil zwischen die in den Figuren nach oben weisenden Schenkel der Presszangenarme 14 drückt und damit die für das Verpressen selbst erforderliche Kraft bereitstellt.

Beim Verpressen greifen die keilartigen Spitzen 15, also die Pressteile, unter die schrägen Flächen 8 des Indikators und damit an die Fußbereiche der Schenkel der Presslasche 2. In der Position gemäß Figur 5c wird dabei noch keine oder keine nennenswerte Kraft auf den Indikator 5 ausgeübt und noch keine Verpressung durchgeführt. In einer weitergehenden Schließbewegung von Figur 5c nach Figur 6c wird die eigentliche Verpressung der Presslasche 2 durch Zusammenschieben der erwähnten Fußbereiche und dabei plastisches Verformen durchgeführt (die konventionell ist und deswegen nicht näher erläutert werden muss). Gleichzeitig werden durch die Wechselwirkung zwischen den Pressteilen 15 und den Schrägflächen 8 Kräfte auf den Indikator 5 ausgeübt, die diesen abclipsen. Er ist dann zunächst in dem in Figur 5c und 6c unter den Pressteilen 15 erkennbaren Hohlraum gefangen und wird bei einer weiteren Öffnungsbewegung danach seitlich ausgestoßen.

Die Figuren 4b, 5b und 6b zeigen zwei weitere von insgesamt vier Werkzeugteilen, nämlich Führungsteile 18, die grundsätzlich ähnlich wie die Pressteile 15 bewegt werden. Dazu sind sie auf denselben Bolzen und damit an denselben Drehachsen 16 gelagert. Ferner weisen sie jeweils in den Figuren 4a-6a, 4d-6d und 7b sichtbare Längsschlitze 19 auf, in denen an den Presszangenarmen 14 befestigte Stifte 20 über eine bestimmte Strecke beweglich sind. In den Figuren 4b-6b erkennt man ferner kleine Federelemente in einem Zylindergehäuse, die mit 21 bezeichnet sind und in einem Gewinde in der jeweiligen Bohrung gehalten sind. Über dieses Gewinde können sie verstellt werden. Sie beaufschlagen mit ihren außenseitigen gefederten Kolbenstangen die erwähnten Stifte 20. Damit nehmen also die Presszangenarme 14 die Führungsteile 18 in allen Bewegungsphasen zwischen den Positionen gemäß den Figuren 4 und 5 mit und sind die Führungsteile dabei in ihrer relativ zu den Presszangenarmen 14 innersten Position, vgl. die Figuren 4a-6a. Wenn die Führungsteile in noch näher beschriebener Weise in der Position gemäß Figur 5 am Pressfitting anstoßen, können die Pressteile 15 darüber hinaus weiter in die Pressstellung gemäß Figur 6 bewegt werden, und zwar abgesehen von den durch die Wechselwirkung zwischen den Pressteilen 15 und dem Pressfitting entstehenden Kräften gegen die Kräfte der Federelemente 21.

Bei den umgekehrten Bewegungen bleiben die Führungsteile zunächst bei einer Bewegung von Figur 6 nach Figur 7 in ihrer geschlossensten Stellung und bewegen sich erst ab der Position gemäß Figur 7 dann weiter mit den Pressteilen nach außen.

Wie durch die Benennung schon vorgegeben, haben die Führungsteile 18 die Aufgabe, das Werkzeug relativ zu dem Pressfitting und der Leitung (sowie weiteren mit dem Pressfitting verbundenen Vorrichtungen) zu positionieren und dem Benutzer eine korrekte Positionierung durch eine Führung, das heißt auch "haptische" Rückmeldung, bei der manuellen Handhabung die Positionierung zu erleichtern. Dazu weisen die Führungsteile jeweils in axialer Richtung außen liegende Seitenwände auf, die in den Figuren 4a-6a nach oben und nach unten weisen und mit 22 bezeichnet sind. Diese Seitenwände 22 lassen in der Position der Figuren 5 und 6 einen Spalt zwischen sich, der für den mittleren Teil des jeweiligen Steges 4 axial außerhalb des Querteils und des T-Profils ausreicht. Die Innenseiten dieser Seitenwände 22 sind dabei etwas schräg gestellt und passen insoweit zu der Schrägstellung der axialen Seitenkanten der Stege 4. Der Begriff "schräg" bezieht sich hierbei auf die Schließbewegung, die ja im Wesentlichen in einer Richtung senkrecht zur Leitungsrichtung und außerdem senkrecht zu der erwähnten Richtung vom Mittelpunkt der Leitung (und des Pressfittings) durch die Mitte der Presslasche 2 nach außen verläuft. Die Seitenwände 22 gleiten bei der Bewegung von Figur 4 nach Figur 5 an den axial äußeren Kanten der Stege 4 entlang, weswegen diese in der erläuterten Weise etwas schräg gestellt sind. Dies führt im Wesentlichen zu einer Positionierung entlang der axialen Richtung und auch hinsichtlich Drehbewegungen um eine Drehachse, die vom Leitungsmittelpunkt mittig durch die Presslasche 2 nach außen führt.

Außerdem gibt es auf den zylindrischen Teil der Spannzange 1 und auch des Hülsenteils 3 zu gerichtete Außenwände der Führungsteile, die mit 23 bezeichnet sind und in den Figuren 4b-6b die untere Seite der gezeichneten abschließenden Spitzen der Führungsteile bilden. Diese Außenwände 23 haben an ihrer Innenseite (in Bezug auf das Werkzeug), also in den Teildarstellungen b und c nach unten, ebenfalls eine schräge Fläche. Diese ist mit 24 bezeichnet und kommt in Wechselwirkung mit der schrägen Fläche 9 des jeweiligen Steges 4. Hierdurch erfolgt eine Führung im Hinblick auf die richtige Nähe zur Leitung (Bewegung entlang der Richtung vom Mittelpunkt des Pressfittings durch die Presslasche 2 nach außen und umgekehrt) und hinsichtlich Drehungen um eine Drehachse, die senkrecht zu dieser gerade erwähnten Abstandsrichtung und zur Leitungsrichtung liegt. Ferner erfolgt dadurch eine Führung um Drehungen um die Leitungsrichtung als Achse. Auch die verbleibende Verschieberichtung, nämlich in der Schließrichtung der Werkzeugteile, erfolgt durch diese Wechselwirkung zwischen den schrägen Flächen 24 und 9, aber auch durch die zuvor beschriebene zwischen der schrägen Fläche 12 und der an der Seitenwand 22.

Die beschriebenen Führungsvorgänge finden statt bei einer Annäherung aus der Position gemäß Figur 4 in die gemäß Figur 5 und ist dann idealerweise abgeschlossen. In der Position gemäß Figur 5 sitzen also die Führungsteile 18 praktisch spielfrei auf dem Pressfitting auf, obwohl der Pressvorgang noch gar nicht stattgefunden hat. Damit ist sichergestellt, dass der eigentliche Pressvorgang von Figur 5 in Figur 6 in korrekter Lage vonstattengeht. Auch erst dann wird der Indikator 5 abgeclipst, vgl. Figur 6c, d; er bleibt also am Platz, wenn das Werkzeug aufgrund grober Fehlpositionierung gar nicht in die Position gemäß Figur 5 gelangt und neu angesetzt werden muss.

Die Figuren 4c-6c und 7a zeigen an den in der Bewegungsrichtung der Werkzeughälften beim Verpressen einander zugewandten Innenseiten der Arme 14, jeweils unterhalb der keilartigen Pressteile 15, je einen nasenartigen Vorsprung 25; mit etwas Aufmerksamkeit ist einer davon auch in Figur 4a und 5d zu sehen. Gemäß Figur 6c wird der bei der Bewegung von Figur 5 nach Figur 6 abgeclipste Indikator 5 oberhalb dieser nasenartigen Vorsprünge 25, nämlich an ihren dem Pressfitting zugewandten Kanten und zwischen den Armen 14 eingeklemmt. Der Indikator 5 bewegt sich also nach dem Abclipsen nicht frei, sondern wird sofort eingefangen und kann damit nicht unkontrolliert wegspringen.

Bei dem nächsten Bewegungsschritt von Figur 6 nach Figur 7 kommt der Indikator 5 allerdings frei, weil sich die Arme 14 auseinanderbewegen. Er fällt dementsprechend gemäß Figur 7b seitlich durch eine Auswurföffnung 26 in den Seitenwänden 22 heraus. Diese Öffnung 26 teilt sich hälftig auf die beiden Seitenwände 22 auf und eine analoge Öffnung ist auf der anderen Seite (in axialer Richtung), also in Figur 7b nach hinten weisend, vorgesehen. Dementsprechend kann man in den Figuren 4-6b und c durch diese Öffnungen 26 hindurchsehen.

Bei dem Herausrutschen gemäß Figur 7b hat der Indikator 5 allerdings die beim Abclipsen entstehende kinetische Energie verloren, weil sich seine beim Abclipsen auftretende elastische Verspannung abgebaut hat und außerdem die (geringfügige) elastische Verspannung während des Verklemmens über den Vorsprüngen 25 beim Öffnen langsam abnimmt und nicht ruckartig. Damit fällt der Indikator 5 kontrolliert aus der Auswurföffnung 26 heraus und Verletzungsrisiken werden vermieden. Auch kann der Indikator 5 in dieser Weise besser gesammelt werden (wozu nach Wunsch auch nur eine einzige Auswurföffnung 26 vorgesehen sein kann).

Die Verklemmung des Indikators 5 soll bei der Bewegung aus der Position gemäß Figur 6 in die gemäß Figur 7 für einen Anfangsteil der Bewegung erhalten bleiben, um den Indikator 5 noch kurz zu sichern. Dementsprechend ist er in Figur 6c zwischen den Pressteilen nicht nur eingeklemmt, sondern dabei auch etwas verformt. Bei dieser Verformbarkeit kommt die Bauweise mit der großen mittigen Öffnung vorteilhaft zur Wirkung.

Weiterhin zeigen die Figuren 5-7a, 5c und 6c, dass der Indikator 5 auch nicht in "tieferliegende" Bereiche zwischen den Werkzeughälften fallen kann, weil ihm in radialer Richtung gegenüberliegend an den Innenseiten der Werkzeughälften Abdeckwände 27 vorgesehen sind, die jeweils einstückig zu den Führungsteilen 18 gehören, also an die Werkzeugteile in den äußeren Ebenen angeformt sind. Diese Wände 27 greifen in axialer Richtung durch die mittlere Ebene, also die Pressteile 15, hindurch und sind dementsprechend in den Positionen gemäß den Figuren 5 und 7 ebenfalls geschlossen (und nicht teilgeöffnet). Selbst wenn sie infolge der Teilöffnung einen kleinen Schlitz zwischen sich lassen würden, wäre dieser aber ersichtlich nicht groß genug, um ein Verklemmen des Indikators 5 bewirken zu können.

## Patentansprüche

1. Verwendung eines Presswerkzeugs zum Verpressen eines Fittings mit einem zylindrischen Teil (1) und einer davon abstehenden Presslasche (2) senkrecht zu einer axialen Richtung des Fittings,
wobei das Presswerkzeug versehen ist mit zwei mit einer Bewegung aufeinander zu zum Verpressen der Presslasche (2) schließbaren und mit einer Bewegung voneinander weg offenbaren Werkzeughälften (14, 15, 18),
wobei der Pressfitting einen Fittingteil (5) als Indikator (5) für die Verpressung der Presslasche (2) aufweist, der bei dem Verpressen von dem Pressfitting abgenommen wird,
wobei die beiden Werkzeughälften (14, 15, 18) in jeweiligen bzgl. der axialen Richtung seitlichen Außenwänden (22) der Werkzeughälften (14, 15, 18) in einem bzgl. dieser Außenwand (22) geschlossenen Zustand der Werkzeughälften (14, 15, 18) eine Auswurföffnung (26) zum Auswerfen des bei dem Verpressen von dem Pressfitting abgenommenen Indikators (5) aufweisen und
wobei der Indikator (5) zwischen den Werkzeughälften (14, 15, 18) des Presswerkzeugs aufgenommen und nach der Verpressung ausgeworfen wird.

2. Verwendung nach Anspruch 1, bei der die Werkzeughälften (14, 15, 18) an ihren bzgl. der Schließbewegung einander zugewandten Innenseiten je eine Kante (25) aufweisen, gegen welche Kanten (25) der Indikator (5) nach dem Abnehmen von dem Pressfitting anschlägt.

3. Verwendung nach Anspruch 1 oder 2, bei der die Werkzeughälften (14, 15, 18) jeweils ein der Verpressung der Presslasche (2) bei der Schließbewegung dienendes Pressteil (15) und ein dem Führen des Presswerkzeugs auf dem Pressfitting bei der Schließbewegung dienendes Führungsteil (18) aufweisen, wobei zumindest in einer der Verpressung dienenden Schlussphase der Schließbewegung jedes Pressteil (15) über das jeweilige Führungsteil (18) hinaus aufeinander zu bewegt wird und wobei die Auswurföffnung (26) in den Seitenwänden der Führungsteile (18) vorgesehen ist.

4. Verwendung nach Anspruch 3, bei der die Werkzeughälften (14, 15, 18) jeweils doppelt ausgeführte Führungsteile (18) aufweisen, die bzgl. der axialen Richtung beidseits des jeweiligen Pressteils (15) vorgesehen sind, wobei beidseits in den Seitenwänden (22) der Führungsteile (18) je eine Auswurföffnung (26) vorgesehen ist.

5. Verwendung nach einem der vorstehenden Ansprüche, bei der der Indikator (5) vor dem Verpressen an der Presslasche (2) und ihrer Umgebung in solcher Weise vorgesehen ist, dass er vollständig zwischen den Werkzeughälften (14, 15, 18) aufgenommen wird.

6. Verwendung nach einem der vorstehenden Ansprüche, bei der der Indikator (5) durch die Auswurföffnung (26) in der axialen Richtung seitlich ausgeworfen wird.

7. Verwendung nach Anspruch 6, bei der der Indikator (5) durch elastisches Lösen eines Formschlusses von dem Pressfitting abnehmbar ist und bei dem Verpressen abgenommen wird.

8. Verwendung nach Anspruch 7, bei der der Indikator (5) um die Presslasche (2) geschlossen umläuft, aus einem elastischen Material besteht und radial außerhalb der Presslasche (2) eine Öffnung aufweist, wobei die Öffnung vorzugsweise den gesamten Bereich radial außerhalb der Presslasche (2) erfasst.

9. Verwendung nach einem der Ansprüche 6-8, bei der der Indikator (5) nach dem elastischen Lösen des Formschlusses zwischen den Werkzeughälften (14, 15, 18) in Richtung der Schließbewegung eingeklemmt wird und sich danach infolge der Öffnungsbewegung löst, um ausgeworfen zu werden.

10. Verwendung nach Anspruch 9, bei der der Indikator (5) elastisch ist und bei dem Einklemmen zwischen den Werkzeughälften (14, 15, 18) elastisch nachgibt.

11. Verwendung nach einem der Ansprüche 6-10, bei der ein der Presslasche (2) und dem Indikator (5) gegenüberliegender Innenbereich (27) der Werkzeughälften (14, 15, 18) bei dem Auswerfen geschlossen ist, sodass sich der Indikator (5) nicht in dem Presswerkzeug verklemmen kann.

12. Satz aus einem Pressfitting mit einem zylindrischen Teil (1) und einer davon abstehenden Presslasche (2), die senkrecht zu einer axialen Richtung des Fittings zu verpressen ist, und mit einem bei dem Verpressen der Presslasche (2) abnehmbaren Indikator (5) als Teil des Pressfittings
und aus einem dazu passenden Presswerkzeug mit zwei mit einer Bewegung aufeinander zu zum Verpressen der Presslasche (2) schließbaren und mit einer Bewegung voneinander weg öffenbaren Werkzeughälften (14, 15, 18),
wobei die beiden Werkzeughälften (14, 15, 18) in jeweiligen bzgl. der axialen Richtung seitlichen Außenwänden (22) der Werkzeughälften (14, 15, 18) in einem bzgl. dieser Außenwand (22) geschlossenen Zustand der Werkzeughälften (14, 15, 18) eine Auswurföffnung (26) zum Auswerfen des bei dem Verpressen von dem Pressfitting abgenommenen Indikators (5) aufweisen und
der Satz dazu ausgelegt ist, dass bei dem Verpressen der von dem Pressfitting abgenommene Indikator (5) zwischen den Werkzeughälften (14, 15, 18) des Presswerkzeugs aufgenommen und nach der Verpressung ausgeworfen wird.

13. Satz nach Anspruch 12, bei dem die Werkzeughälften (14, 15, 18) an ihren bzgl. der Schließbewegung einander zugewandten Innenseiten je eine Kante (25) aufweisen zum Anschlagen des Indikators (5) gegen die Kante (25) nach dem Abnehmen von dem Pressfitting.

14. Satz nach Anspruch 12 oder 13, bei dem die Werkzeughälften (14, 15, 18) jeweils ein der Verpressung der Presslasche (2) bei der Schließbewegung dienendes Pressteil (15) und ein dem Führen des Presswerkzeugs auf dem Pressfitting bei der Schließbewegung dienendes Führungsteil (18) aufweisen, wobei zumindest in einer der Verpressung dienenden Schlussphase der Schließbewegung jedes Pressteil (15) über das jeweilige Führungsteil (18) hinaus aufeinander zu bewegbar ist und wobei die Auswurföffnung (26) in den Seitenwänden der Führungsteile (18) vorgesehen ist.

15. Satz nach einem der Ansprüche 12-14, ausgelegt für eine Verwendung nach einem der Ansprüche 3-11.

## Claims

1. Use of a press tool for pressing a fitting having a cylindrical part (1) and protruding therefrom a press lug (2) perpendicular to an axial direction of said fitting,
wherein said press tool is provided with two tool halves (14, 15, 18) being closable by a movement towards each other for said pressing and being openable by a movement away from each other,
wherein said press fitting comprises a fitting part (5) as an indicator (5) for said pressing of said press lug (2), which is removed from said press fitting during said pressing,
wherein said two tool halves (14, 15, 18) comprise, in respective outer walls (22) of said tool halves (14, 15, 18) which are lateral with respect to said axial direction, in a closed state of said tool halves (14, 15, 18) with respect to said outer wall (22), an ejection opening (26) for ejecting said indicator (5) removed from said press fitting during said pressing,
wherein said indicator (5) is received between said tool halves (14, 15, 18) of said press tool and ejected after said pressing.

2. The use according claim 1, wherein said tool halves (14, 15, 18) respectively comprise an edge (25) at their inner sides facing each other with respect to said closing movement, said indicator (5) abutting against said edges (25) after said removal from said press fitting.

3. The use according to claim 1 or 2, wherein said tool halves (14, 15, 18) respectively comprise a press part (15) for said pressing of said press lug (2) during said closing movement and a guide part (18) for guiding said press tool on said press fitting during said closing movement, wherein at least in a final phase of said closing movement for said pressing each press part (15) is moved beyond the respective guide part (18) towards each other and wherein said ejection opening (26) is provided in the lateral walls of said guide parts (18).

4. The use according to claim 3, wherein said tool halves (14, 15, 18) respectively comprise guide parts (18) provided doubly which are provided on both sides of the respective press part (15) with respect to the axial direction, wherein an injection opening (26) is respectively provided on both sides in said side walls (22) of said guide parts (18).

5. The use according to one of the preceding claims, wherein said indicator (5) is, prior to said pressing, provided at said press lug (2) and its surrounding in such a way that it is received completely between said tool halves (14, 15, 18).

6. The use according to one of the preceding claims, wherein said indicator (5) is ejected through said ejection opening (26) laterally in the axial direction.

7. The use according to claim 6, wherein said indicator (5) is removable from said press fitting by elastically releasing a form closure and is removed accordingly during said pressing.

8. The use according claim 7, wherein said indicator (5) extends around said press lug (2) in a closed shape, is made of an elastic material and comprises an opening radially outside of said press lug (2), wherein said opening preferably embraces the whole region radially outside of said press lug (2).

9. The use according to one of claims 6 to 8, wherein said indicator (5) is, after elastically releasing said form fit, clamped between said tool halves (14, 15, 18) in direction of said closing movement and is released thereafter due to said opening movement for being ejected.

10. The use according to claim 9, wherein said indicator (5) is elastical and is elastically deformed between said tool halves (14, 15, 18) during said clamping.

11. The use according to one claims 6 to 10, wherein an inner region (27) of said tool halves (14, 15, 18), which lies opposite to said press lug (2) and said indicator (5), is closed during said ejection so that said indicator (5) cannot get seized in said press tool.

12. A set comprising a press fitting having a cylindrical part (1) and protruding therefrom a press lug (2) provided for being pressed perpendicularly to an axial direction of said fitting, and an indicator (5) as a part of said press fitting which is removable during said pressing of said press fitting,
and a press tool fitting thereto and having two tool halves (14, 15, 18) being closable by a movement towards each other for said pressing and being openable by a movement away from each other,
wherein said two tool halves (14, 15, 18) comprise, in respective outer walls (22) of said tool halves (14, 15, 18) which are lateral with respect to said axial direction, in a closed state of said tool halves (14, 15, 18) with respect to said outer wall (22), an ejection opening (26) for ejecting said indicator (5) removed from said press fitting during said pressing,
wherein said set is adapted that said indicator (5) is received between said tool halves (14, 15, 18) of said press tool during said pressing and ejected after said pressing.

13. The set according to claim 12, wherein said tool halves (14, 15, 18) respectively comprise an edge (25) at their inner sides facing each other with respect to said closing movement, said indicator (5) abutting against said edges (25) after said removal from said press fitting.

14. The set according to claim 12 or 13, wherein said tool halves (14, 15, 18) respectively comprise a press part (15) for said pressing of said press lug (2) during said closing movement and a guide part (18) for guiding said press tool on said press fitting during said closing movement, wherein at least in a final phase of said closing movement for said pressing each press part (15) is moved beyond the respective guide part (18) towards each other and wherein said ejection opening (26) is provided in the lateral walls of said guide parts (18).

15. The set according to one of claims 12 to 14, adapted for a use according to one of claims 3 to 11.

## Revendications

1. Utilisation d'un outil à sertir destiné à serrer un raccord, qui possède une partie cylindrique (1) et une languette à sertir (2) décalée de cette dernière, perpendiculairement au sens axial du raccord,
l'outil à sertir étant pourvu de deux moitiés d'outil (14, 15, 18) refermables selon un mouvement dirigé l'une vers l'autre pour serrer la languette à sertir (2) et ouvrables selon un mouvement dirigé en s'éloignant l'une de l'autre,
le raccord à sertir présentant une partie de raccord (5) qui sert d'indicateur (5) quant au serrage de la languette à sertir (2), lequel est détaché lors du serrage du raccord à sertir,
les deux moitiés d'outil (14, 15, 18) présentant, dans des parois extérieures latérales (22), par rapport au sens axial, des moitiés d'outil (14, 15, 18), et dans un état fermé des moitiés d'outil (14, 15, 18) par rapport auxdites parois extérieures (22), une ouverture d'éjection (26) permettant d'éjecter l'indicateur (5) qui est détaché du raccord à sertir lors du serrage, et l'indicateur (5) étant reçu entre les moitiés d'outil (14, 15, 18) de l'outil à sertir et éjecté suite au serrage.

2. Utilisation selon la revendication 1, dans laquelle les moitiés d'outil (14, 15, 18) présentent respectivement un bord (25) sur leurs côtés intérieurs tournés l'un vers l'autre eu égard au mouvement de fermeture, ledit indicateur (5) venant en butée contre ces bords (25) après son détachement du raccord à sertir.

3. Utilisation selon la revendication 1 ou 2, dans laquelle les moitiés d'outil (14, 15, 18) présentent respectivement une partie de sertissage (15) servant au serrage de la languette à sertir (2) lors du mouvement de fermeture et une partie de guidage (18) servant au guidage de l'outil à sertir sur le raccord à sertir lors du mouvement de fermeture, étant entendu que, au moins dans une phase finale du mouvement de fermeture permettant le sertissage, chaque partie de sertissage (15) peut se déplacer vers l'autre en dépassant la partie de guidage (18), l'ouverture d'éjection (26) étant prévue dans les parois latérales des parties de guidage (18).

4. Utilisation selon la revendication 3, dans laquelle les moitiés d'outil (14, 15, 18) présentent des parties de guidage (18) conçues en double et prévues, eu égard au sens axial, de part et d'autre de la partie de sertissage respective (15), une ouverture d'éjection (26) respective étant prévue de part et d'autre dans les parois latérales (22) des parties de guidage (18).

5. Utilisation selon l'une des revendications précédentes, dans laquelle l'indicateur (5) est prévu, avant le serrage, sur la languette à sertir (2) et autour de celle-ci de manière à être totalement reçu entre les moitiés d'outil (14, 15, 18).

6. Utilisation selon l'une des revendications précédentes, dans laquelle l'indicateur (5) est éjecté sur le côté, dans le sens axial, par l'ouverture d'éjection (26).

7. Utilisation selon la revendication 6, dans laquelle l'indicateur (5) peut être détaché du raccord à sertir sous l'effet d'une perte élastique d'une complémentarité de forme et est effectivement détaché lors du serrage.

8. Utilisation selon la revendication 7, dans laquelle l'indicateur (5) est disposé tout autour de la languette à sertir (2), est composé d'une matière élastique et présente une ouverture radialement extérieure à la languette à sertir (2), ladite ouverture comprenant de préférence la totalité de la zone radialement extérieure à la languette à sertir (2).

9. Utilisation selon l'une des revendications 6 à 8, dans laquelle l'indicateur (5), après la perte élastique de la complémentarité de forme, est serré entre les moitiés d'outil (14, 15, 18), dans la direction du mouvement de fermeture, avant de se désolidariser suite au mouvement de l'ouverture, afin d'être éjecté.

10. Utilisation selon la revendication 9, dans laquelle l'indicateur (5) est élastique et fléchit élastiquement lors du serrage entre les moitiés d'outil (14, 15, 18).

11. Utilisation selon l'une des revendications 6 à 10, dans laquelle une zone intérieure (27) des moitiés d'outil (14, 15, 18) opposée à la languette à sertir (2) et à l'indicateur (5) est fermée lors de l'éjection afin d'empêcher que l'indicateur (5) ne se coince dans l'outil à sertir.

12. Ensemble constitué par un raccord à sertir qui possède une partie cylindrique (1) et une languette à sertir (2) décalée de cette dernière et destinée à être serrée perpendiculairement au sens axial du raccord, le raccord à sertir possédant un indicateur (5) détachable lors du serrage de la languette à sertir (2)
et par un outil à sertir adapté audit raccord et pourvu de deux moitiés d'outil (14, 15, 18) refermables selon un mouvement dirigé l'une vers l'autre pour serrer la languette à sertir (2) et ouvrables selon un mouvement dirigé en s'éloignant l'une de l'autre,
les deux moitiés d'outil (14, 15, 18) présentant, dans des parois extérieures latérales (22), par rapport au sens axial, des moitiés d'outil (14, 15, 18), et dans un état fermé des moitiés d'outil (14, 15, 18) par rapport auxdites parois extérieures (22), une ouverture d'éjection (26) permettant d'éjecter l'indicateur (5) qui est détaché du raccord à sertir lors du serrage, et
l'ensemble étant conçu de manière que, lors du serrage, l'indicateur (5) détaché du raccord à sertir est reçu entre les moitiés d'outil (14, 15, 18) de l'outil à sertir et est éjecté suite au serrage.

13. Ensemble selon la revendication 12, dans lequel les moitiés d'outil (14, 15, 18) présentent respectivement un bord (25) sur leurs côtés intérieurs tournés l'un vers l'autre eu égard au mouvement de fermeture, contre lequel bord (25) ledit indicateur (5) est destiné à venir en butée après son détachement du raccord à sertir.

14. Ensemble selon la revendication 12 ou 13, dans lequel les moitiés d'outil (14, 15, 18) présentent respectivement une partie de sertissage (15) servant au serrage de la languette à sertir (2) lors du mouvement de fermeture et une partie de guidage (18) servant au guidage de l'outil à sertir sur le raccord à sertir lors du mouvement de fermeture, étant entendu que, au moins dans une phase finale du mouvement de fermeture permettant le sertissage, chaque partie de sertissage (15) peut se déplacer vers l'autre en dépassant la partie de guidage (18), l'ouverture d'éjection (26) étant prévue dans les parois latérales des parties de guidage (18).

15. Ensemble selon l'une des revendications 12 à 14, conçu pour une utilisation selon l'une des revendications 3 à 11.
